# EUROPÄISCHE PATENTSCHRIFT

(11) **EP 2 777 919 B1**
(45) Veröffentlichungstag und Bekanntmachung des Hinweises auf die Patenterteilung: **22.06.2022**
(21) Anmeldenummer: 13158777.6
(22) Anmeldetag: 12.03.2013
(51) Int. Cl.: B29C 70/50, B29C 70/20, B29C 53/26, B32B 37/20, B32B 38/06, B32B 38/18

(54) **Verfahren zur kontinuierlichen Herstellung von Laminaten aus Faserbändchen und deren Verwendung**
Method for the continuous production of laminates from fibre ribbons, and their use
Procédé de fabrication continue de laminés à partir de rubans de fibres et leur utilisation

(43) Veröffentlichungstag der Anmeldung: 17.09.2014
(73) Patentinhaber: EMS-CHEMIE AG, 7013 Domat/Ems (CH)
(72) Erfinder: Jeltsch, Thomas, 7013 Domat/Ems (CH); Henkelmann, Bernd, 7402 Bonaduz (CH); Arnold, Marcus, 6314 Unterägeri (CH); Henne, Markus, 8200 Schaffhausen (CH)
(74) Vertreter: Pfenning, Meinig & Partner mbB

(56) Entgegenhaltungen:
- EP-A1- 2 018 950
- DE-A1-102007 003 596
- US-A- 2 665 735
- US-A- 5 662 761
- US-A1- 2008 213 530
- US-B2- 7 431 981
- CHEN H W ET AL: "Autofrettage analysis of a fibre-reinforced composite tube structure incorporated with a SMA", COMPOSITE STRUCTURES, ELSEVIER SCIENCE LTD, GB, vol. 89, no. 4, 1 August 2009 (2009-08-01) , pages 497-508, XP026056920, ISSN: 0263-8223, DOI: 10.1016/J.COMPSTRUCT.2008.11.005 [retrieved on 2009-04-24]
- TRAKAKIS G ET AL: "Development and testing of a self-deformed composite material", COMPOSITE STRUCTURES, ELSEVIER SCIENCE LTD, GB, vol. 92, no. 2, 1 January 2010 (2010-01-01), pages 306-311, XP026691777, ISSN: 0263-8223, DOI: 10.1016/J.COMPSTRUCT.2009.08.001 [retrieved on 2009-08-06]

## Beschreibung

Die Erfindung betrifft ein Verfahren zur kontinuierlichen Herstellung von Laminaten aus mindestens zwei Faserbändchen aus in einer Kunststoffmatrix unidirektional eingebetteten Fasern. Ebenso betrifft die Erfindung derart hergestellte Laminate, die ein Formgedächtnis aufweisen können. Verwendung finden die erfindungsgemäßen Laminate zur lokalen Verstärkung von Spritzgussteilen.

Im Leichtbau, insbesondere im Automobilbau, werden für tragende Konstruktionskomponenten zunehmend faserverstärkte Verbundbauteile eingesetzt. Für den gewichts- und kostenoptimierten Leichtbau mit Faserverbundbauteilen ist der Einsatz der kostenbestimmenden Werkstoffe, insbesondere der Faseranteile, zu minimieren. Bisher wurde vorgeschlagen, dass die Fasern kraftflussgerecht in der Bauteilstruktur integriert werden, ohne dass ein Faserverschnitt anfällt. Dies wird durch verschiedene Textiltechniken, wie zum Beispiel Flechten, Weben, Nähen usw. ermöglicht, die zur Herstellung von Faserformlingen (sogenannte Preforms) für endlos faserverstärkte Verbundbauteile eingesetzt werden. Diese Verfahren ermöglichen die Übertragung von Kraftfluss- und Spannungsanalysen in eine entsprechende textile Verstärkungsstruktur. Bei Verwendung einer Stick- oder Nähtechnik werden die Verstärkungsfasern mit einem Stickautomaten entsprechend den Anforderungen aus der analytischen Bauteilberechnung auf einem Stickgrund fixiert. Nachteilig an diesem Verfahren ist jedoch, dass nach der Herstellung der Preform die entsprechende Faserstruktur mit Harz bzw. Kunststoff imprägniert werden muss. Dadurch ergibt sich ein zusätzlicher Verfahrensschritt, der die Zykluszeiten des Fertigungsprozesses deutlich erhöht.

Bei der Verwendung von duroplastischen Werkstoffen zur Herstellung der Matrix des Faserverbundbauteils stehen für diese nachträgliche Imprägnierung der Faserstruktur sogenannte Infusionsverfahren, wie zum Beispiel RTM (Resin Transfer Molding), SRIM (Structural Resin Injection Molding) oder Vakuuminjektion zur Verfügung, wobei die Kunststoffmatrix mittels Druckbeaufschlagung in ein entsprechendes Formnest des Faserverbundbauteils eingespritzt wird und unter Wärme und Druck aushärtet. Die Injektionsverfahren sind jedoch relativ aufwändig und lassen nur eine geringe Produktivität aufgrund relativ langer Produktionszyklen zu.

Aus der WO 99/52703 ist ein Verfahren zur Herstellung von Strukturbauteilen bekannt, bei dem geschmolzene Endlosfaser-Stränge übereinander abgelegt werden, so dass sie eine zusammenhängende Trägerstruktur mit flächigen Verbindungsteilen bilden und mit einer formbildenden langfaserverstärkten Masse in einem Werkzeug verpresst werden. Auch diese bekannten Verfahren weisen noch wesentliche Nachteile bezüglich der Aufwändigkeit der Herstellung, der Reproduzierbarkeit und der definierten Ausbildung von integrierten Endlosfaser-Trägerstrukturen auf. So ist es zum Beispiel nicht möglich, ein definiertes einstückiges, in einem Verpressungsschritt herstellbares, Strukturbauteil zu schaffen, welches eine integrierte, genau definierte und hinsichtlich der Position optimierte Endlosfaser-Verstärkungsstruktur enthält.

In der DE 10 2008 026 161 A1 wird ein Verfahren zur Herstellung von Faserverbundbauteilen beschrieben, bei dem ein Matrixmaterial auf die Verstärkungsfasern aufgebracht wird, die Verstärkungsfasern und das Matrixmaterial unter Bildung eines imprägnierten Fasermaterials zusammengeführt und anschließend auf eine die Form des Faserverbundteils nachbildende Trägerstruktur aufgebracht werden. Nachteil bei diesem Verfahren ist es, dass keine frei formbaren Faserbändchen bereitgestellt werden, sondern diese immer mit einer Trägerstruktur verbunden sind.

Die EP 2 018 950 A1 beschreibt ein Verfahren zur kontinuierlichen Herstellung von Laminaten aus mindestens zwei Faserbändchen aus von einer Kunststoffmatrix unidirektional eingebetteten Fasern.

Die US 5 662 761 A beschreibt ein weiteres Verfahren zur Herstellung von Laminaten mit unidirektional orientierten Fasern.

Die DE 10 2007 003 596 A1 beschreibt ein Verfahren zur Herstellung einer Blattfeder aus einem Faserverbundwerkstoff mit einem thermoplastischen Kunststoff sowie derart hergestellte Blattfedern.

Des Weiteren sind sogenannte Prepregs bekannt, mit denen üblicherweise ein endlos faserverstärktes Halbzeug, z.B. in Form von Faserbändchen, bezeichnet wird. Nachteilig an diesen vorimprägnierten Fasern ist jedoch, dass das entstehende Halbzeug aufgrund seiner Beschaffenheit nur für geometrisch einfache Strukturen anwendbar und zudem einen sehr hohen Verbrauch an Fasermaterial bedingt, da immer ein Zuschneiden der Prepregs auf die gewünschte Kontur bzw. Form des Faserverbundteils erfolgen muss. Dadurch entstehen entsprechende Faserabfälle, die die Herstellung von Faserverbundbauteilen unter Verwendung von Prepregs deutlich verteuern.

Aufgrund der nicht-thermoplastischen Eigenschaften von Endlosfasern aus den Materialien Kohle, Glas, Aramid o. Ä. stellt das Vorformen dieser Prepregs in Form von Endlosfaserbändchen zwecks Positionierung und Überspritzung insbesondere in einem Spritzgusswerkzeug ein Problem dar.

Ausgehend hiervon war es Aufgabe der vorliegenden Erfindung, ein Verfahren zur Herstellung von Laminaten bereitzustellen, dass eine möglichst große Flexibilität hinsichtlich der Form der Laminate ermöglicht und gleichzeitig eine möglichst hohe Produktivität bei der Herstellung derartiger Laminate ermöglicht.

Diese Aufgabe wird durch das Verfahren zur kontinuierlichen Herstellung von Laminaten mit den Merkmalen des Anspruchs. Die weiteren abhängigen Ansprüche zeigen vorteilhafte Weiterbildungen auf. In Anspruch 15 werden erfindungsgemäße Verwendungen angegeben.

Erfindungsgemäß wird ein Verfahren zur kontinuierlichen Herstellung von Laminaten aus mindestens zwei Faserbändchen aus in einer Kunststoffmatrix unidirektional eingebetteten Fasern bereitgestellt, das folgende Schritte aufweist:
a) Transport der Faserbändchen von jeweils einem Materialspeicher mit mindestens einer Transportrolle zu einer Fügestation,
b) Schichtartiges Zusammenführen der Faserbändchen in der Fügestation mit mindestens zwei Konsolidierungseinheiten,
c) Fügen der Faserbändchen durch die beiden Konsolidierungseinheiten zu einem fortlaufenden Laminat sowie
d) Verfestigen des Laminats.

Als Fügetechniken können sämtliche aus dem Stand der Technik bekannten Verfahren wie Umformen, Schweißen, Löten, Kleben, Plasmafügen, Verkrallen, Nähen und Lösemittelfügen eingesetzt werden. Besonders bevorzugt wird die Kunststoffmatrix der Faserbändchen aufgeschmolzen, im aufgeschmolzenen Zustand verpresst und anschließend durch Abkühlen verfestigt.

Die Konsolidierungeinheiten können z.B. Konsolidierungsrollen, Förderketten oder Förderbänder sein, bevorzugt ist es Konsolidierungsrollen zu verwenden.

Erfindungsgemäß, vor oder während Schritt d) mittels mindestens zwei Formgebungseinheiten, insbesondere Formgebungsrollen eine Verformung des Laminats erfolgt, indem die Formgebungseinheiten hinter den Konsolidierungseinheiten so positioniert werden, dass durch die Verspannung des Laminats unterschiedliche Formen des Laminats beim Verfestigen des Laminats realisiert werden.

Die Formgebung kann dabei nicht nur durch die starre Anordnung der Formgebungseinheiten erfolgen. Ebenso ist es auch möglich, dass eine Formgebung durch rotative und translatorische Verschiebung der Formgebungseinheiten während des Laminiervorgangs möglich ist. Hiermit sind dann auch komplexere Geometrien wie S-förmige oder mäanderförmige Geometrien verwirklicht. Es ist weiterhin bevorzugt, dass die rotative und translatorische Bewegung der Formgebungseinheiten über eine Prozesssteuerung festgelegt wird.

Weiterhin ist es bevorzugt, dass die Faserbändchen in einer Vorbehandlungsstation, die zwischen den Transportrollen und der Fügestation angeordnet ist, für den Fügevorgang vorbereitet werden. Hierzu zählen grundsätzlich sämtliche Vorbehandlungsschritte, wie zum Beispiel das Erwärmen, Aufbringen von Klebstoff, Entfetten, Beflammen, Plasmabehandeln und Trocknen der Faserbändchen.

Für die erfindungsgemäße Variante der Verfestigung der aufgeschmolzenen Faserbändchen erfolgt in der Vorbehandlungsstation eine thermische Behandlung der Faserbändchen, wobei ein zumindest bereichsweises Aufschmelzen der Kunststoffmatrix erfolgt. Anschließend werden die Faserbändchen, insbesondere die aufgeschmolzenen Bereiche, miteinander in Kontakt gebracht und zwischen den Konsolidierungseinheiten verpresst. Im Anschluss erfolgt dann eine Verfestigung zum Laminat durch Abkühlung der Kunststoffmatrix.

Die thermische Behandlung der Faserbändchen in der Vorbehandlungsstation kann vorzugsweise mittels Heißluft, Heißgas, insbesondere Stickstoff, Ultraschall, Reibung, Beflammen, Laser und/oder Bestrahlung erfolgen. Hierbei ist eine Infrarot-Bestrahlung bevorzugt, da hiermit wesentliche Verfahrensvorteile verbunden sind. So weisen Infrarot-Strahler sehr kurze Reaktionszeiten auf, wodurch die Energie dosiert eingetragen werden kann und Energie gespart wird. Weiterhin sind Infrarot-Strahler kompakte Wärmeeinheiten im Vergleich zu Heizöfen. Ein weiterer Vorteil der Infrarot-Strahler besteht darin, dass große Flächen homogen erwärmt werden können. Insbesondere bevorzugt ist die thermische Vorbehandlung über Heissluft oder Heissgas.

Die Verfestigung der aufgeschmolzenen Faserbändchen erfolgt durch Kühlen. Dazu können zum Beispiel Fluide, wie ein Wasserbad, Wassernebel, Luft oder andere Gase verwendet werden. Es kommt auch in Betracht die Verfestigung durch thermischen Ausgleich zu erreichen, dabei wird nur ein Bereich der Aussenschicht erwärmt und der thermische Ausgleich mit der noch kalten Innenschicht gewährleistet die Verfestigung. Eine weitere bevorzugte Variante sieht die Verfestigung durch Kontaktkühlung vor.

In der erfindungsgemäßen Variante des Fügens durch Verkleben erfolgt vorzugsweise in der Vorbehandlungsstation bei mindestens einem Faserbändchen eine zumindest bereichsweise Auftragung eines Klebstoffs. In der Fügestation werden dann die Faserbändchen, insbesondere die den Klebstoff aufweisenden Bereiche, in Kontakt gebracht. Im Anschluss erfolgt dann die Verfestigung zum Preform durch Trocknen des Klebstoffs. Bevorzugte Klebstoffe sind Epoxide, silanbasierte Klebstoffe, Polyurethane, Methacrylsäureester und Schmelzkleber.

Eine bevorzugte Ausführungsform des Verfahrens sieht vor, dass die Faserbändchen zwischen den Transportrollen und der Vorbehandlungsstation mit mindestens einer Führungsrolle geführt werden. Hier können anstelle einer Führungsrolle auch statische Elemente, zum Beispiel Führungsstege, verwendet werden, um eine Führung der Faserbändchen zu ermöglichen.

Weiterhin ist es bevorzugt, dass nach Verfestigung des Laminats dieses in Teilstücke getrennt werden kann. Dies kann insbesondere durch Schneiden, Laserbehandlung, Quetschen, Sägen, Wasserstrahlen, Knicken oder Kombinationen dieser Maßnahmen erfolgen. Die Länge dieser Teilstücke kann generell in einem Bereich von 0,1 cm bis 5 m liegen. Die Länge der Teilstücke richtet sich dabei nach der Verwendung des Laminats, bevorzugte Bereiche sind von 1 m bis 5 m, von 50 cm bis 1 m, von 15 cm bis 50 cm und von 0.1 cm bis 15 cm auf.

Wenn als Konsolidierungseinheit Konsolidierungsrollen zum Einsatz kommen ist es weiterhin bevorzugt, dass diese mit einer unterschiedlichen Umfangsgeschwindigkeit betrieben werden. Hierbei ist es bevorzugt, dass sich der absolute Wert der Umfangsgeschwindigkeiten um nicht mehr als 100 % unterscheidet. Ein unterschiedlicher Radius der Rollen ist dabei ebenfalls möglich. Durch die unterschiedliche Umfangsgeschwindigkeit der Konsolidierungsrollen kann eine Schubverformung in das Laminat eingebracht werden.

Die Klemmkraft der Konsolidierungsrollen kann während des erfindungsgemäßen Verfahrens variabel eingestellt werden. Dies erfolgt bevorzugt z.B. über einen Pneumatikzylinder, einen Hydraulikzylinder, Federn, Spindeln oder Linearmotoren. Damit lässt sich die Tiefe der Prägung steuern und kann materialspezifisch eingestellt werden.

Bevorzugt ist es, dass die Prägetiefe nicht 1/10 der Dicke eines einzelnen Bändchens übersteigt. So werden Wellungen der Fasern in der oberen Schicht vermieden und die mechanischen Eigenschaften des Laminats werden durch den Prägevorgang nicht verschlechtert.

Eine weitere bevorzugte Ausführungsform sieht vor, dass die Konsolidierungseinheiten eine Oberflächenstrukturierung aufweisen, insbesondere in Form von Rillen, Kreuzkerben, Rändelstrukturen oder Kombinationen hiervon. Ebenso ist es bevorzugt, dass die Konsolidierungseinheiten eine Beschichtung, insbesondere aus Gummi, Hartgummi oder Materialien zur Verbesserung der Trenneigenschaften, insbesondere Teflon, aufweisen. Durch diese Maßnahmen kann ein Prägemuster auf den Außenseiten der Faserbändchen erzeugt werden, wodurch eine wesentlich verbesserte Verbundhaftung gewährleistet werden kann.

Der Füllgrad der Faserbändchen an Fasern beträgt vorzugsweise 1 bis 60 Volumenprozent, besonders bevorzugt 5 bis 50 Volumenprozent und insbesondere bevorzugt 10 bis 40 Volumenprozent.

Die Kunststoffmatrix der Faserbändchen ist vorzugsweise eine thermoplastische Kunststoffmatrix ausgewählt aus der Gruppe bestehend aus Acetalharze, flüssigkristalline Polymere, Polyacrylate, Polymethacrylate, olefinische und cycloolefinische Polymere, Polyamide, Polyamidelastomere, insbesondere Polyesteramide, Polyetheramide und Polyetheresteramide, Polyamidimide, Polyarylether beeinhaltend Polyphenylether, Polycarbonate, Polysulfone, Polyetherimide, Polyimide, Polyester, Polyester-Polycarbonate, Polyether, Polyoxyethylene, Polystyrol, Polysulfone, vinylische Polymere wie Polyvinylchlorid und Polyvinylacetat, oder Mischungen aus einem oder mehreren der aufgezählten Materialien, insbesondere ABS, MBS, SAN, PC und PMMA.

Für den Fall, dass das Fügen der Faserbändchen durch Verkleben, Lösemittelfügen, Verkrallen oder Nähen erfolgt, ist es auch möglich, dass die Kunststoffmatrix eine duroplastische Kunststoffmatrix ist, die aus der Gruppe bestehend aus Melaminharzen, Phenoplasten, Polyesterharzen, Aminoplasten, Epoxidharzen, Polyurethanen, vernetzten Polyacrylaten und/oder deren Mischungen oder Blends ausgewählt ist.

Die erfindungsgemässen Thermoplaste weisen bevorzugt Schmelzpunkte von 50 bis 500°C, bevorzugt von 170 bis 350°C und besonders bevorzugt von 170 bis 280°C auf.

Als thermoplastische Kunststoffmatrix wird bevorzugt eine Matrix aus Polyamid verwendet. Die Polyamide werden dabei bevorzugt aus aliphatischen beinhaltend cycloaliphatische Diaminen und aromatischen oder aliphatischen Dicarbonsäuren oder aus Lactamen erhalten. Besonders bevorzugt werden Homo- und Co-Polyamide gebildet aus cycloaliphatischen C6-C17-Diaminen und/oder aliphatischen C4-C12-Diaminen mit aliphatischen C4-C20-Dicarbonsäuren und/oder aromatischen Dicarbonsäuren verwendet.

Spezielle nicht limitierende Beispiele für die Dicarbonsäuren sind Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, 1,4-Cyclohexandicarbonsäure, Eicosandisäure, Naphthalindicarbonsäure, Terephthalsäure und Isophthalsäure.

Bevorzugt sind alternativ auch Polyamide, die gebildet sind aus den vorgenannten Diaminen und Dicarbonsäuren sowie Lactamen mit 4 bis 15 C-Atomen und/oder α,ω-Aminosäuren mit 4 bis 15 C-Atomen.

Spezielle nicht limitierende Beispiele für die Diamine sind Hexamethylendiamin, Heptamethylendiamin, Octamethylendiamin, Nonamethylendiamin, Decamethylendiamin, Undecanmethylendiamin, Dodecamethylendiamin, Trimethylhexamethylendiamin, 2-Methyl-1,5-pentandiamin, Isophorondiamin, Norbornandiamin, 1,3-Bis(aminomethyl)cyclohexan, MACM, MXD, PACM, PXD und TMACM.

MACM steht für 3,3'-Dimethyl-4,4'-diaminocyclohexylmethan, MXD steht für meta-Xylylendiamin, PACM steht für 4,4'-Diaminocyclohexylmethan, PXD steht für para-Xylylendiamin und TMACM steht für 3,3',5,5'-Tetramethyl-4,4'-diaminocyclohexylmethan.

Weiterhin bevorzugt sind Polyamide aus MXD und Terephthalsäure, oder MXD und Isophthalsäure.

Bevorzugte transparente Polyamide sind ausgewählt aus der Gruppe: MACM9-18, PACM9-18, MACMI/12, MACMI/MACMT, MACMI/MACMT/12, 6I6T/MACMI/MACMT/12, 3-6T, 6I6T, TMDT, 6I/MACMI/MACMT, 6I/PACMI/PACMT, 6I/6T/MACMI, MACMI/MACM36, 6I, 12/PACMI, MXDI/6I oder 12/MACMT, 6/PACMT, 6/6I, 6/IPDT oder Mischungen daraus, wobei 50 mol.-% der IPS durch TPS ersetzt sein kann.

Weiterhin bevorzugt sind teilkristalline Polyamide ausgewählt aus der Gruppe bestehend aus PA6, PA66, PA69, PA610, PA612, PA11, PA12, PA1010, PA1012, PA1210, PA1212. Besonders bevorzugt sind PA 12 und Mischungen aus PA 66 und PA 6I/6T.

Vorzugsweise sind die Fasern Endlosfasern oder Stapelfasern mit überkritischer Faserlänge, insbesondere Kohle-, Glas-, Mineral- oder Aramidfasern. Besonders bevorzugt sind hier Kohle- und Glasfasern mit flachem oder rundem Querschnitt, insbesondere bevorzugt sind Kohlefasern. Es können auch Mischungen aus den genannten Fasern verwendet werden.

Die Faserbändchen können vorzugsweise weitere Zusatzstoffe aufweisen. Diese sind bevorzugt ausgewählt aus der Gruppe bestehend aus anorganischen Stabilisatoren, organischen Stabilisatoren, Gleitmitteln, Entschäumern, kettenverlängernden Additiven, optischen Aufhellern, Weichmachern, Haftvermittlern, halogenhaltigen Flammschutzmitteln, halogenfreien Flammschutzmitteln, Schlagzähmodifikatoren, Partikeln, Füll- und Verstärkungsstoffen, Farbstoffe, Pigmente und/oder deren Mischungen.

Eine weitere bevorzugte Ausführungsform sieht vor, dass jedes einzelne Faserbändchen über mindestens eine eigene Transportrolle zugeführt wird, wobei die jeweiligen Transportrollen für die einzelnen Faserbändchen separat ansteuerbar sind. Dies ermöglicht, dass die einzelnen Faserbändchen mit unterschiedlicher Geschwindigkeit zur Fügestation geführt werden. Hierbei können die Geschwindigkeiten bis zu 100 m/min betragen, bevorzugt ist es die Geschwindigkeit zwischen 6 cm/min und 100 m/min zu halten. Bei tieferen Geschwindigkeiten ist die Wirtschaftlichkeit des Verfahrens zu gering, höhere Geschwindigkeiten hingegen führen für die Variante "Aufschmelzen der thermoplastischen Matrix" zu einem ungenügenden Wärmeeintrag.

Eine weitere bevorzugte Ausführungsform sieht vor, dass die verwendeten Faserbändchen die gleiche Kunststoffmatrix, Faserverstärkung und Additivierung aufweisen. Es ist jedoch auch möglich Faserbändchen einzusetzen, die sich hinsichtlich ihrer Zusammensetzung unterscheiden.

Ein Laminat wird ebenso bereitgestellt, das gemäß dem zuvor beschriebenen Verfahren herstellbar ist.

Durch geeignete Prozessführung, insbesondere den Einsatz von Formgebungsrollen und/oder verwenden von Konsolidierungsrollen mit unterschiedlicher Umlaufgeschwindigikeit, weisen die erfindungsgemäßen Laminate ein Formgedächtnis auf. Hierbei handelt es sich um kreisförmige, S-förmige oder mäanderförmige Strukturen.

Unter Formgedächtnis der Laminate bzw. der Kunststoffmatrix ist hier zu verstehen, dass sich das Laminat bzw. der Kunststoff nach einer nachträglichen Umformung an ihre frühere, durch die Formgebungsrollen eingebrachte äußere Form "erinnern" kann und insofern ein Formgedächtnis besitzt. Um die frühere Form abzurufen, kann das Laminat einer Stimulierung unterzogen werden. Dies kann z.B. durch Wärmezufuhr, Bestrahlung oder eine andere

Änderung der chemischen Umgebung erfolgen.

Die bevorzugten Dimensionen der Laminate weisen vorzugsweise eine Länge von 0,1 cm bis 5 m auf. Die Breite beträgt vorzugsweise 5 bis 40 mm, bevorzugt 5 bis 20 mm, besonders bevorzugt 5 bis 12 mm. Die Dicke der Laminate beträgt vorzugsweise 0,3 bis 1,5 mm, bevorzugt 0,4 bis 1,2 mm und besonders bevorzugt 0,5 bis 1,0 mm.

Die Laminate finden Verwendung bei der lokalen Verstärkung von Spritzgussteilen. Hierzu zählen insbesondere:
- Druckbehälter, bevorzugt Wasserzähler oder Pumpengehäuse;
- Automobilteile, bevorzugt Fahrwerksbauteile, Streben, Interieurteile, Exterieurteile, Getriebebauteile und Felgen;
- Industrie- und Konsumgüter, bevorzugt Hebel, Befestigungen, Gartengeräte, Werkzeuge, Haushaltsgeräte, Sanitärbauteile, Schläger, Bögen und Schuhe.

Es ist dabei bevorzugt das Laminat mit einem Polymer zu umspritzen, dass gleich dem Polymer ist welches für das Faserbändchen verwendet wurde. Weiterhin ist es bevorzugt ein Polymer zum Umspritzen zu verwenden, welches einen gleichen oder höheren Schmelzpunkt aufweist als das Polymer das für das Faserbändchen verwendet wurde.

Ebenso ist es möglich, dass die Laminate selbst als Blattfedern eingesetzt werden.

Die vorliegende Offenbarung betrifft weiterhin Faserbändchen mit Prägung, Verfahren zu deren Herstellung und Verwendung der Faserbändchen zur Verstärkung von Spritzgussteilen. Wie bei den oben beschriebenen Laminaten wird durch die Prägung auch für die Faserbändchen eine wesentlich verbesserte Verbundhaftung zum Spritzgussteil gewährleistet.

Als Ausgangsmaterialien für Faserbändchen mit Prägung kommen alle der oben genannten Kunst-, Verstärkungs- und Zusatzstoffe in Frage. Die oben angegebenen bevorzugten Ausführungsformen hinsichtlich der Ausgangsmaterialien der Faserbändchen zur Herstellung von Laminaten gelten auch für die Faserbändchen mit Prägung.

Die Dicke der Faserbändchen beträgt vorzugsweise von 0.1 bis 1.5 mm, bevorzugt von 0.2 bis 1.0 mm und besonders bevorzugt von 0.2 bis 0.5 mm. Die Breite der Faserbändchen beträgt vorzugsweise von 1 bis 40 mm, bevorzugt von 2 bis 20 mm und besonders bevorzugt von 5 bis 12 mm.

Der Schritt der Prägung lässt sich prinzipiell in jedes der bekannten Herstellungsverfahren für Faserbändchen integrieren, kann aber auch separat durchgeführt werden. Herstellungsverfahren für Faserbändchen sind z.B. in EP 0 579 047 A1 und DE 43 25 260 A1 beschrieben. Aus Gründen der Wirtschaftlichkeit ist es bevorzugt den Schritt der Prägung in ein Pultrusionsverfahren zur Herstellung von Faserbändchen zu integrieren.

Die Prägung erfolgt insbesondere durch Stempel, Rollen oder Kettensegmente die eine Oberflächenstrukturierung aufweisen. Die Oberflächenstrukturierung ist insbesondere in Form von Rillen, Kreuzkerben, Rändelstrukturen oder Kombinationen hiervon ausgebildet.

Die Faserbändchen können auf Ober- und Unterseite oder auch nur auf einer der beiden Seiten geprägt sein. Außerdem kann sich die Prägung über die komplette Oberfläche erstrecken oder sich auf Teile der Oberfläche beschränken.

Bevorzugt ist es, dass die Prägetiefe nicht 1/10 der Faserbändchendicke übersteigt. So werden Wellungen der Fasern in der oberen Schicht vermieden und die mechanischen Eigenschaften des Faserbändchens werden durch den Prägevorgang nicht verschlechtert.

Die Faserbändchen mit Prägung finden Verwendung bei der lokalen Verstärkung von Spritzgussteilen. Insbesondere bevorzugt sind die bereits bei den Laminaten aufgezählten Verwendungen.

Es ist dabei bevorzugt das Faserbändchen mit einem Polymer zu umspritzen, das gleich dem Polymer ist welches für das Faserbändchen verwendet wurde.

Weiterhin ist es bevorzugt ein Polymer zum Umspritzen zu verwenden, welches einen gleichen oder höheren Schmelzpunkt aufweist als das Polymer das für das Faserbändchen verwendet wurde.

Das erfindungsgemäße Verfahren soll anhand der nachfolgenden Figuren näher beschrieben werden, ohne dieses auf die hier gezeigten spezifischen Ausführungsformen einschränken zu wollen.

Fig. 1 zeigt anhand einer schematischen Darstellung eine Variante des erfindungsgemäßen Verfahrens.

Fig. 2 zeigt eine weitere Variante des erfindungsgemäßen Verfahrens anhand einer schematischen Darstellung.

Fig. 3 zeigt eine Variante einer Oberflächenstrukturierung der erfindungsgemäßen Konsolidierungsrollen.

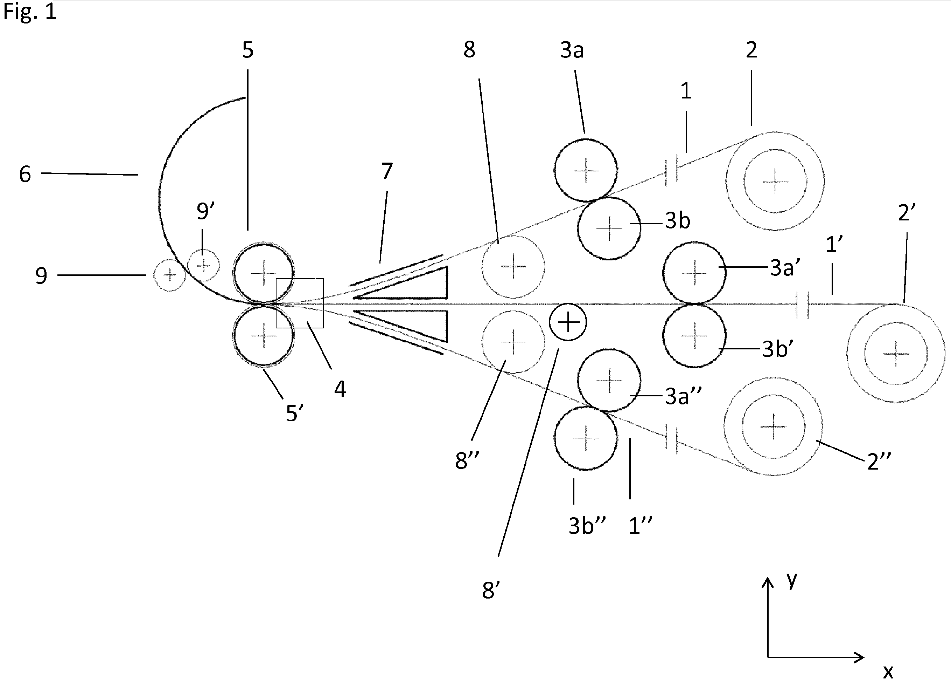

Das Verfahren gemäß der vorliegenden Erfindung kann gemäss der prinzipiellen Darstellung in Fig. 1 ausgeführt werden. Die Faserbändchen (1,1',1") werden von einem Materialspeicher (2,2',2") über die paarweise angeordneten Transportrollen (3a,3b,3a',3b',3c,3c') zu einer Vorbehandlungsstation (7) geführt, optional kann zur Unterstützung des Transports der Faserbändchen (1,1'1") eine Führungsrolle (8,8',8") verwendet werden. In der Vorbehandlungsstation (7) werden die Faserbändchen (1,1',1") optional für den Schritt des Fügens präpariert, z.B. bei Faserbändern mit einer thermoplastischen Matrix erfolgt die Präparation durch Erhitzen und zumindest teilweises Aufschmelzen der thermoplastischen Matrix. Der Weitertransport der Faserbändchen (1,1',1") von der Vorbehandlungsstation (7) zur Fügestation (4) erfolgt kontinuierlich. In der Fügestation (4) erfolgt das Fügen der Faserbändchen (1,1',1") zum Laminat (6) durch Konsolidierungsrollen (5,5'). Nach der Konsolidierung der Faserbändchen (1,1',1") erfolgt die Verfestigung zum Laminat (6). Optional wird das Laminat (6) durch Formgebungsrollen (9,9') geführt, die hinter der Konsolidierungseinheit angeordnet sind.

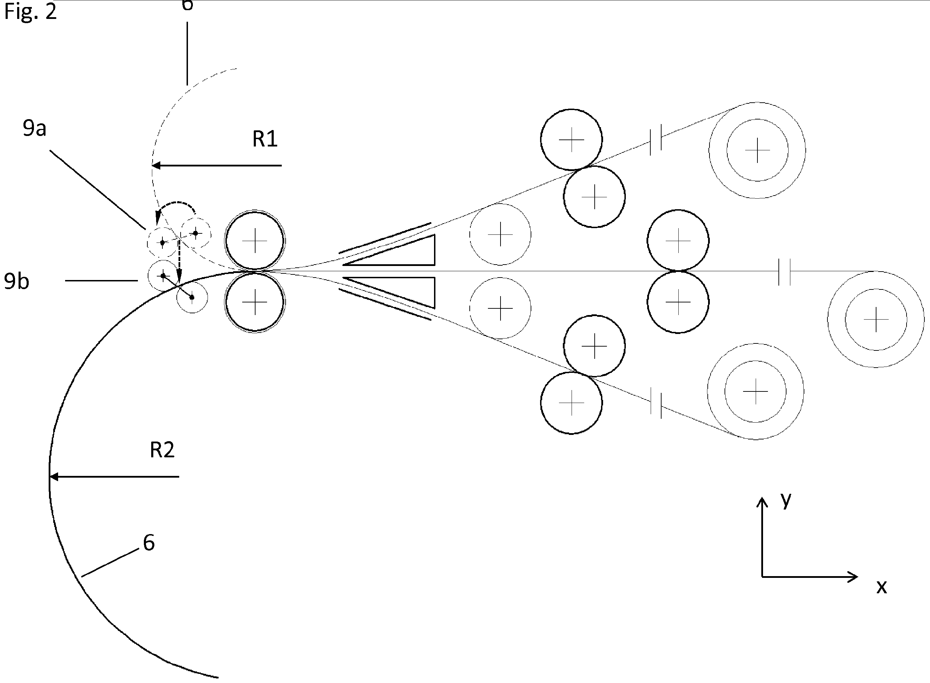

Gemäß der prinzipiellen Darstellung in Fig. 2 können durch Schwenken und Verschieben der Formgebungsrollen (9,9') Krümmung und Krümmungsrichtung des Laminats (6) manipuliert werden. So führt die Ausrichtung der Formgebungsrollen (9,9') in Position 9a zu einem Laminat (6) mit dem Radius R1, wohingegen die Ausrichtung der Formgebungsrollen (9,9') in Position 9b zu einem Laminat (6) mit dem Radius R2 führt. Da die Ausrichtung der Formgebungsrollen (9,9') während des Herstellprozesses des Laminats (6) jederzeit veränderbar ist, kann dem Laminat (6) nahezu jede vorstellbare Form gegeben werden.

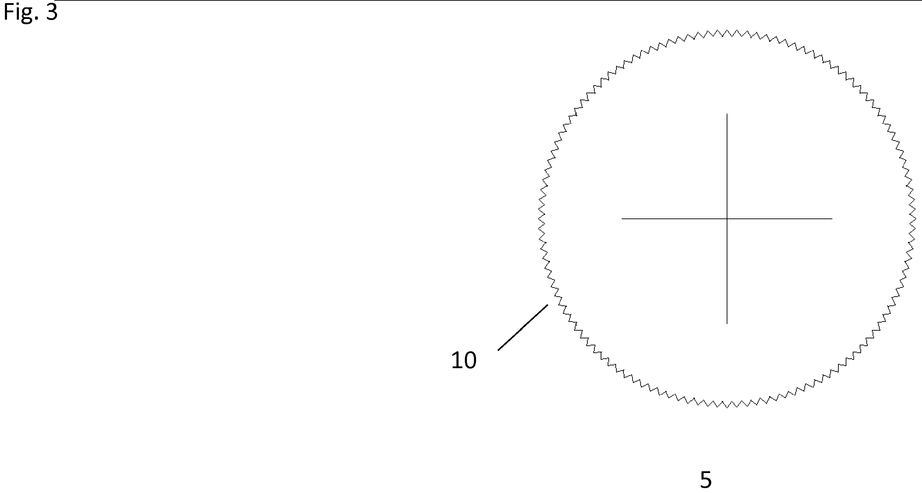

Die Konsolidierungsrollen (5, 5') können, wie in Figur 3 gezeigt, eine Oberflächenstruktur (10) aufweisen, die eine Prägung der Faserbändchen oder Laminate erlaubt.

## Patentansprüche

1. Verfahren zur kontinuierlichen Herstellung von Laminaten aus mindestens zwei Faserbändchen (1,1',1") aus in einer Kunststoffmatrix unidirektional eingebetteten Fasern mit folgenden Schritten:
a) Transport der Faserbändchen (1,1',1") von jeweils einem Materialspeicher (2,2',2") mit mindestens einer Transportrolle (3a,3b,3a',3b',3a",3b") zu einer Fügestation (4),
b) Schichtartiges Zusammenführen der Faserbändchen (1,1',1") in der Fügestation (4) mit mindestens zwei Konsolidierungseinheiten,
c) Fügen der Faserbändchen (1,1',1") durch die beiden Konsolidierungseinheiten zu einem fortlaufenden Laminat (6) sowie
d) Verfestigen des Laminats (6),
wobei vor oder während Schritt d) mittels mindestens zwei Formgebungseinheiten (9,9') eine Verformung des Laminats (6) mit kreisförmiger, S-förmiger oder mäanderförmiger Geometrie erfolgt, indem die Formgebungseinheiten (9,9') hinter den Konsolidierungseinheiten (5,5') so positioniert werden, dass durch die Verspannung des Laminats (6) unterschiedliche Formen des Laminats (6) beim Verfestigen des Laminats (6) realisiert werden.

2. Verfahren nach Anspruch 1, **dadurch gekennzeichnet, dass** die mindestens zwei Formgebungseinheiten Formgebungsrollen (9,9') und die mindestens zwei Konsolidierungseinheiten Konsolidierungsrollen (5,5') sind.

3. Verfahren nach Anspruch 2, **dadurch gekennzeichnet, dass** die Konsolidierungungsrollen (5,5') mit einer unterschiedlichen Umfangsgeschwindigkeit betrieben werden.

4. Verfahren nach einem der vorhergehenden Ansprüche,
**dadurch gekennzeichnet, dass** die Faserbändchen (1,1',1") in einer Vorbehandlungsstation (7), die zwischen den Transportrollen (3a,3b,3a',3b',3a",3b") und der Fügestation (4) angeordnet ist, für den Fügevorgang vorbereitet werden.

5. Verfahren nach Anspruch 4,
**dadurch gekennzeichnet, dass** in der Vorbehandlungsstation (7) eine thermische Behandlung der Faserbändchen (1,1',1") für das zumindest bereichsweise Aufschmelzen der Kunststoffmatrix erfolgt, in der Fügestation (4) das Fügen durch in Kontakt bringen der aufgeschmolzenen Bereiche der Faserbändchen (1,1',1") und Verpressen zwischen den Konsolidierungseinheiten erfolgt und das Verfestigen mit einer Abkühlung des Laminats (6) einhergeht.

6. Verfahren nach Anspruch 4,
**dadurch gekennzeichnet, dass** in der Vorbehandlungsstation (7) auf mindestens einem Faserbändchen (1,1',1") zumindest bereichsweise ein Klebstoff aufgetragen wird und in der Fügestation das Fügen durch in Kontakt bringen der den Klebstoff aufweisenden Bereiche der Faserbändchen (1,1',1") und Verfestigen der Faserbändchen durch Trocknen des Klebstoffs erfolgt.

7. Verfahren nach einem der vorhergehenden Ansprüche,
**dadurch gekennzeichnet, dass** die Faserbändchen (1,1',1") zwischen den Transportrollen (3a,3b,3a',3b',3a",3b") und der Vorbehandlungsstation (7) mit mindestens einer Führungseinheit geführt werden.

8. Verfahren nach einem der vorhergehenden Ansprüche,
**dadurch gekennzeichnet, dass** nach Schritt d) eine Trennung des Laminats (6) in Teilstücke erfolgt.

9. Verfahren nach einem der vorhergehenden Ansprüche,
**dadurch gekennzeichnet, dass** die Kunststoffmatrix eine thermoplastische Kunststoffmatrix ausgewählt aus der Gruppe bestehend aus Acetalharze, flüssigkristalline Polymere, Polyacrylate, Polymethacrylate, olefinische und cycloolefinische Polymere, Polyamide, Polyamidelastomere, insbesondere Polyesteramide, Polyetheramide und Polyetheresteramide, Polyamidimide, Polyarylether beeinhaltend Polyphenylether, Polycarbonate, Polysulfone, Polyetherimide, Polyimide, Polyester, Polyester-Polycarbonate, Polyether, Polyoxyethylene, Polystyrol, Polysulfone, vinylische Polymere wie Polyvinylchlorid und Polyvinylacetat, oder Mischungen aus einem oder mehreren der aufgezählten Materialien ist.

10. Verfahren nach Anspruch 6,
**dadurch gekennzeichnet, dass** die Kunststoffmatrix eine duroplastische Kunststoffmatrix ausgewählt aus der Gruppe bestehend aus Melaminharzen, Phenoplasten, Polyesterharzen, Aminoplasten, Epoxidharzen, Polyurethanen, vernetzten Polyacrylaten und/oder deren Mischungen oder Blends ist.

11. Verfahren nach einem der vorhergehenden Ansprüche,
**dadurch gekennzeichnet, dass** die Fasern Endlosfasern oder Stapelfasern mit überkritischer Faserlänge sind.

12. Verfahren nach einem der vorhergehenden Ansprüche,
**dadurch gekennzeichnet, dass** die Faserbändchen Zusatzstoffe ausgewählt aus der Gruppe bestehend aus anorganischen Stabilisatoren, organischen Stabilisatoren, Gleitmitteln, Entschäumern, kettenverlängernden Additiven, optischen Aufhellern, Weichmachern, Haftvermittlern, halogenhaltigen Flammschutzmitteln, halogenfreien Flammschutzmitteln, Schlagzähmodifikatoren, Partikeln, Füll- und Verstärkungsstoffen, Farbstoffe, Pigmente und/oder deren Mischungen enthalten.

13. Verfahren nach einem der vorhergehenden Ansprüche,
**dadurch gekennzeichnet, dass** jedes einzelne Faserbändchen (1,1',1") über mindestens eine eigene Transportrolle ((3a, 3b) oder (3a',3b') oder (3a", 3b")) zugeführt wird, wobei die mindestens eine Transportrolle ((3a, 3b) oder (3a',3b') oder (3a", 3b")) jeweils separat ansteuerbar sind.

14. Verfahren nach einem der vorhergehenden Ansprüche,
**dadurch gekennzeichnet, dass** die Konsolidierungseinheiten eine Oberflächenstrukturierung aufweisen und/oder eine Beschichtung aufweisen zur Erzeugung eines Prägemusters auf den Außenseiten der Faserbändchen.

15. Verwendung eines Laminats (6), hergestellt nach dem Verfahren nach einem der Ansprüche 1 bis 14 zur lokalen Verstärkung eines Spritzgussteils, die aus der folgenden Gruppe ausgewählt sind:
- Druckbehältern, bevorzugt Wasserzähler oder Pumpengehäuse;
- Automobilteilen, bevorzugt Fahrwerksbauteile, Streben, Interieurteile, Exterieurteile, Getriebebauteile und Felgen;
- Industrie- und Konsumgüter, bevorzugt Hebel, Befestigungen, Gartengeräte, Werkzeuge, Haushaltsgeräte, Sanitärbauteile, Schläger, Bögen und Schuhe.

## Claims

1. Method for the continuous production of laminates made of at least two fibre bands (1, 1', 1") made of fibres which are embedded unidirectionally in a plastic material matrix, having the following steps:
a) transport of the fibre bands (1, 1', 1") from respectively one material store (2, 2', 2") by at least one transport roller (3a, 3b, 3a', 3b', 3a", 3b") to a joining station (4),
b) layer-like combining of the fibres bands (1, 1', 1") in the joining station (4) by at least two consolidation units,
c) joining the fibre bands (1, 1', 1") by means of the two consolidation units to form a continuous laminate (6) and also
d) solidification of the laminate (6),
wherein before or during step d), shaping of the laminate (6) with circular, S-shaped or meandering geometries is effected by means of at least two shaping units the shaping units (9, 9') being positioned behind the consolidation units such that different shapes of the laminate (6) are produced during solidification of the laminate (6) due to the stressing of the laminate (6).

2. Method according to claim 1,
characterised in thatthe at least two shaping units, are shaping rollers (9, 9')and the at least two consolidation units are consolidation rollers (5, 5').

3. Method according to claim 2,
**characterised in that** the consolidation rollers (5, 5') are operated at a different circumferential speed.

4. Method according to one of the preceding claims, **characterised in that** the fibre bands (1, 1', 1") are prepared in a pretreatment station (7) which is disposed between the transport rollers (3a, 3b, 3a', 3b', 3a", 3b") and the joining station (4), for the joining process.

5. Method according to claim 4,
**characterised in that**, in the pretreatment station (7), a thermal treatment of the fibre bands (1, 1', 1") is effected for the melting, at least in regions, of the plastic material matrix, joining is effected, in the joining station (4), by bringing in contact the molten regions of the fibre bands (1, 1', 1") and by compression between the consolidation units and the solidification is accompanied by cooling of the laminate (6).

6. Method according to claim 4,
**characterised in that**, in the pretreatment station (7), an adhesive is applied on at least one fibre band (1, 1', 1"), at least in regions and joining is effected, in the joining station, by bringing in contact the regions of the fibre bands (1, 1', 1") which have the adhesive and solidifying the fibre bands by drying the adhesive.

7. Method according to one of the preceding claims, **characterised in that** the fibre bands (1, 1', 1") are guided between the transport rollers (3a, 3b, 3a', 3b', 3a", 3b") and the pretreatment station (7) by at least one guide unit.

8. Method according to one of the preceding claims, **characterised in that**, after step d), separation of the laminate (6) into partial pieces is effected.

9. Method according to one of the preceding claims, **characterised in that** the plastic material matrix is a thermoplastic plastic material matrix selected from the group consisting of acetal resins, liquid-crystalline polymers, polyacrylates, polymethacrylates, olefinic and cycloolefinic polymers, polyamides, polyamide elastomers, in particular polyester amides, polyether amides and polyether ester amides, polyamide imides, polyaryl ethers including polyphenyl ethers, polycarbonates, polysulphones, polyether imides, polyimides, polyesters, polyester polycarbonates, polyethers, polyoxyethylenes, polystyrene, polysulphones, vinyl polymers such as polyvinyl chloride and polyvinyl acetate or mixtures of one or more of the listed materials.

10. Method according to claim 6,
**characterised in that** the plastic material matrix is a duroplastic plastic material matrix selected from the group consisting of melamine resins, phenoplastics, polyester resins, aminoplastics, epoxy resins, polyurethanes, crosslinked polyacrylates and/or mixtures or blends thereof.

11. Method according to one of the preceding claims, **characterised in that** the fibres are endless fibres or staple fibres with supercritical fibre length.

12. Method according to one of the preceding claims,
**characterised in that** the fibre bands comprise additives selected from the group consisting of inorganic stabilisers, organic stabilisers, lubricants, defoamers, chain-lengthening additives, optical brighteners, plasticisers, adhesion promoters, halogen-containing flame retardants, halogen-free flame retardants, impact modifiers, particles, fillers and reinforcers, colourants, pigments and/or mixtures thereof.

13. Method according to one of the preceding claims,
**characterised in that** each individual fibre band (1, 1', 1") is supplied via at least one separate transport roller (3a, 3b) or (3a', 3b') or (3a", 3b"), the at least one transport roller (3a, 3b) or (3a', 3b') or (3a", 3b") being able to be actuated respectively separately.

14. Method according to one of the preceding claims,
**characterised in that** the consolidation units have a surface structuring,
and/or a coating, for producing an embossed pattern on the outsides of the fibre bands.

15. Use of a laminate (6) producible according to the method according to one of the claims 1 to 14 claim 15 for local reinforcement of an injection moulded part which are selected from the following group:
- pressure containers, preferably water meters or pump housings;
- automobile parts, preferably running gear components, struts, interior parts, exterior parts, transmission components and wheel rims;
- industrial and consumer goods, preferably levers, fixings, garden implements, tools, household appliances, sanitary components, racquets, bows and shoes.

## Revendications

1. Procédé de fabrication en continu de stratifiés à partir d'au moins deux rubans de fibres (1, 1', 1") composés de fibres noyées de manière unidirectionnelle dans une matrice plastique, comprenant les étapes suivantes :
a) le transport des rubans de fibres (1, 1', 1") depuis respectivement un réservoir de matériau (2, 2', 2") avec au moins un rouleau de transport (3a, 3b, 3a', 3b', 3a", 3b") vers un poste d'assemblage (4),
b) la réunion en couches des rubans de fibres (1, 1', 1") dans le poste d'assemblage (4) avec au moins deux unités de consolidation,
c) l'assemblage des rubans de fibres (1, 1', 1") par les deux unités de consolidation en un stratifié (6) continu, et
d) la solidification du stratifié (6),
dans lequel une déformation du stratifié (6) avec une géométrie circulaire, en forme de S ou sinueuse s'effectue avant ou pendant l'étape d) au moyen d'au moins deux unités de mise en forme (9, 9'), du fait que les unités de mise en forme (9, 9') sont positionnées derrière les unités de consolidation (5, 5'), de sorte que différentes formes du stratifié (6) sont réalisées par la mise en tension du stratifié (6) lors de la solidification du stratifié (6).

2. Procédé selon la revendication 1, **caractérisé en ce que** les au moins deux unités de mise en forme sont des rouleaux de mise en forme (9, 9') et les au moins deux unités de consolidation sont des rouleaux de consolidation (5, 5').

3. Procédé selon la revendication 2, **caractérisé en ce que** les rouleaux de consolidation (5, 5') fonctionnent à une vitesse périphérique différente.

4. Procédé selon l'une quelconque des revendications précédentes,
**caractérisé en ce que** les rubans de fibres (1, 1', 1") sont préparés pour l'opération d'assemblage dans un poste de prétraitement (7), qui est disposé entre les rouleaux de transport (3a, 3b, 3a', 3b', 3a", 3b") et le poste d'assemblage (4).

5. Procédé selon la revendication 4,
**caractérisé en ce que** dans le poste de prétraitement (7), un traitement thermique des rubans de fibres (1, 1', 1") s'effectue pour la fusion au moins par endroits de la matrice plastique, dans le poste d'assemblage (4), l'assemblage s'effectue par mise en contact des zones fondues des rubans de fibres (1, 1', 1") et compression entre les unités de consolidation et la solidification s'accompagne d'un refroidissement du stratifié (6).

6. Procédé selon la revendication 4,
**caractérisé en ce que**, dans le poste de prétraitement (7), un adhésif est appliqué au moins par endroits sur au moins un ruban de fibres (1, 1', 1") et dans le poste d'assemblage l'assemblage s'effectue par mise en contact des zones des rubans de fibres (1, 1', 1") présentant l'adhésif et solidification des rubans de fibres par séchage de l'adhésif.

7. Procédé selon l'une quelconque des revendications précédentes,
**caractérisé en ce que** les rubans de fibres (1, 1', 1") sont guidés entre les rouleaux de transport (3a, 3b, 3a', 3b', 3a", 3b") et le poste de prétraitement (7) avec au moins une unité de guidage.

8. Procédé selon l'une quelconque des revendications précédentes,
**caractérisé en ce qu'**après l'étape d) s'effectue une séparation du stratifié (6) en tronçons.

9. Procédé selon l'une quelconque des revendications précédentes,
**caractérisé en ce que** la matrice plastique est une matrice plastique thermoplastique choisie dans le groupe constitué par les polyacétals, polymères à cristaux liquides, polyacrylates, polyméthacrylates, polymères oléfiniques et cyclooléfiniques, polyamides, élastomères de polyamide, en particulier polyesteramides, polyétheramides et polyétheresteramides, polyamidimides, polyaryléthers comportant des polyphényléthers, polycarbonates, polysulfones, polyétherimides, polyimides, polyesters, polyester-polycarbonates, polyéthers, polyoxyéthylènes, polystyrène, polysulfones, polymères vinyliques comme le polychlorure de vinyle et le polyacétate de vinyle, ou des mélanges d'un ou plusieurs des matériaux énumérés.

10. Procédé selon la revendication 6,
**caractérisé en ce que** la matrice plastique est une matrice plastique thermodurcissable choisie dans le groupe constitué par les résines mélaminiques, phénoplastes, résines polyester, aminoplastes, résines époxydes, polyuréthanes, polyacrylates réticulés et/ou leurs mélanges ou mélanges homogènes.

11. Procédé selon l'une quelconque des revendications précédentes,
**caractérisé en ce que** les fibres sont des fibres continues ou fibres discontinues avec une longueur de fibre supercritique.

12. Procédé selon l'une quelconque des revendications précédentes,
**caractérisé en ce que** les rubans de fibres contiennent des additifs choisis dans le groupe constitué par les stabilisateurs inorganiques, stabilisateurs organiques, lubrifiants, agents antimousses, additifs d'allongement de chaîne, azurants optiques, plastifiants, promoteurs d'adhésion, ignifuges contenant des halogènes, ignifuges sans halogènes, modifiants chocs, particules, matières de remplissage et de renforcement, colorants, pigments et/ou leurs mélanges.

13. Procédé selon l'une quelconque des revendications précédentes,
**caractérisé en ce que** chaque ruban de fibres (1, 1', 1") individuel est amené par au moins un rouleau de transport ((3a, 3b) ou (3a', 3b') ou (3a", 3b")) propre, dans lequel le au moins un rouleau de transport ((3a, 3b) ou (3a', 3b') ou (3a", 3b")) peut être commandé respectivement séparément.

14. Procédé selon l'une quelconque des revendications précédentes,
**caractérisé en ce que** les unités de consolidation présentent une structuration de surface et/ou présentent un revêtement pour produire un motif en relief sur les côtés extérieurs des rubans de fibres.

15. Utilisation d'un stratifié (6), fabriqué selon le procédé selon l'une quelconque des revendications 1 à 14 pour le renforcement local d'une pièce moulée par injection, qui sont choisies dans le groupe suivant :
- récipients sous pression, de préférence compteurs à eau ou corps de pompe ;
- pièces automobiles, de préférence composants de châssis, entretoises, pièces d'intérieur, pièces d'extérieur, composants de transmission et jantes ;
- biens industriels et de consommation, de préférence leviers, fixations, outils de jardinage, outils, appareils ménagers, composants sanitaires, raquettes, archets et chaussures.
